# EUROPÄISCHE PATENTSCHRIFT

(11) **EP 2 839 197 B1**
(45) Veröffentlichungstag und Bekanntmachung des Hinweises auf die Patenterteilung: **27.04.2016**
(21) Anmeldenummer: 12790678.2
(22) Anmeldetag: 05.11.2012
(51) Int. Cl.: F16L 17/04, F16L 21/00, F16L 21/08, F16L 25/14, F16L 33/04, F16B 2/08

(54) **SPANNGURT UND ROHRKUPPLUNG ZUM KRAFTSCHLÜSSIGEN VERBINDEN VON ROHREN, INSBESONDERE VON GLATTENDIGEN ROHREN**
TENSIONING STRAP AND PIPE COUPLING FOR CONNECTING PIPES IN A NON-POSITIVE WAY, IN PARTICULAR PIPES WITH SMOOTH ENDS
COLLIER DE SERRAGE ET RACCORD TUBULAIRE POUR LA LIAISON DE FORCE DE TUYAUX, EN PARTICULIER DE TUYAUX À EXTRÉMITÉS LISSES

(30) Priorität: 20.04.2012 EP 12164890
(43) Veröffentlichungstag der Anmeldung: 25.02.2015
(73) Patentinhaber: Straub Werke AG, 7323 Wangs (CH)
(72) Erfinder: SUDAR, Damir, 7310 Bad Ragaz (CH)
(74) Vertreter: Patentbüro Paul Rosenich AG
(86) Internationale Anmeldenummer: PCT/IB2012/056162
(87) Internationale Veröffentlichungsnummer: WO 2013/156830

(56) Entgegenhaltungen:
- EP-A2- 0 303 902
- WO-A1-2006/100628
- WO-A1-2008/004173
- WO-A1-2009/107061
- FR-A- 599 968
- FR-A- 1 140 775
- GB-A- 229 073
- US-A- 1 476 024
- US-A- 3 916 489
- US-A- 4 083 588

## Beschreibung

Die Erfindung betrifft einen Spanngurt für eine Rohrkupplung zum kraftschlüssigen Verbinden von Rohren, insbesondere von glattendigen Rohren, nach dem Oberbegriff des Anspruchs 1, sowie eine eine Rohrkupplung zum kraftschlüssigen Verbinden von Rohren, insbesondere von glattendigen Rohren, nach dem Oberbegriff der Ansprüche 6 und 13.

Derartige Rohrkupplungen, wie beispielsweise unter der Bezeichnung ECO-GRIP© von der STRAUB AG auf den Markt gebracht, werden über die Stossstelle zwischen zwei Rohren montiert und übernehmen die Haltefunktion sowie die Abdichtfunktion im Verbindungsbereich der Rohre. Dazu ist wenigstens ein Dichtelement aus gummielastischem Werkstoff vorgesehen, das in einem dieses oder jedes Dichtelement einfassenden Gehäuse aufgenommen ist. Das Gehäuse aus einer Abfolge von in Umfangsrichtung aufeinanderfolgenden Elementen übernimmt die Übertragung der infolge von Innendruck bzw. von aussen auf die Rohre einwirkenden Kräfte.

In der WO 2006/100628 A1 ist ein Verankerungselement für eine Rohrkupplung geoffenbart, dessen Elemente aus einem im wesentlichen in Achsrichtung der Rohre verlaufenden ersten Schenkel und wenigstens einem zweiten, sich unter einem spitzen Winkel zum ersten Schenkel erstreckenden Schenkel aufgebaut sind. Der Abstand zwischen den Elementen ist bevorzugt durch wenigstens einen verformbaren Steg überbrückt. Eine Dichtung für Übergang zwischen den zu verbindenden Rohren ist innerhalb des Verankerungselementes gehalten, an dessen Aussenseite noch ein das Verankerungselement und die Dichtung umfassendes Gehäuse vorgesehen sein kann.

Die kraftschlüssige Verbindung der Rohre wird durch eine Kraft bewerkstelligt, die über wenigstens einen das Verankerungselement in Umfangsrichtung umfassenden Spanngurt aufgebracht wird. Dessen Enden werden mit Hilfe zumindest einer im wesentlichen tangentiale Spannschraube verspannt, die an im wesentlichen in Achsrichtung der Rohre angeordneten Bolzen an den Enden des Spanngurtes angreift und die Enden des Spanngurtes aufeinander zu zieht.

Durch den Abstand zwischen den Enden des Spanngurtes kommt es zu einer Unterbrechung der gleichmässigen Kraftübertragung im Bereich des anliegenden Spanngurtes. Diese Unterbrechung wird gegebenenfalls durch einen zusätzlichen Bauteil mangelhaft überbrückt. Auch kommt es durch die radiale Beabstandung der Angriffspunkte der Spannkraft der Spannschraube am Bolzen des Spanngurtes gegenüber dem äusseren Rohrumfang zu einer Biegebelastung der Spannschraube und damit zu Verspannungen im Spannschraubenverschluss.

Auf dem Gebiet der Schlauchbriden ist in der GB 229073 A eine Ausführungsform geoffenbart, gemäss der eines der Enden des eigentlichen Spannbandes im zusammengeführten Zustand durch eine Öffnung im gegenüberliegenden, gegenüber der restlichen Länge des Spannbandes verbreiterten Ende hindurch geführt ist. Beide Enden sind geschlauft ausgeführt und nehmen Bolzen auf, zwischen welchen eine Spannschraube eingespannt ist. Zum Verspannen der Schlauchbride werden die Bolzen und somit die Enden des Spannbandes mittels der Spannschraube auseinandergedrückt. Wie auch in der FR 599 968 A dargelegt ist, kann mit derartigen Schlauchbriden eine gleichmässige Pressung entlang des gesamten Umfangs des Schlauches oder Rohres erzielt werden.

Um dabei jedoch unterschiedliche Durchmesser von Schläuchen abdecken zu können, kann die Länge des Spannbandes durch schrittweise Veränderung der Lage der geschlauften Enden verändert werden. Damit die Spannschraube in jeder Länge des Spannbandes verwendet werden kann, sind in der GB 229073 A einzelne, diskrete Löcher im Spannband zum Hindurchführen der Spannschraube vorgesehen. Dabei liegt aber immer zumindest eine Lage des Spannbandes zwischen der Spannschraube und der Dichtung und/oder dem Schlauch oder Rohr, so dass die Spannschraube immer ein beträchtliches Stück ausserhalb des äusseren Rohrumfanges liegt und somit durch diese radiale Beabstandung der Angriffspunkte der Spannkraft auch hier eine wesentliche Biegebelastung der Spannschraube und Verspannungen im Spannschraubenverschluss entstehen.

Eine Schlauchbride, welche die Merkmale des Oberbegriffs des Anspruchs 1 offenbart, ist in der US1476024 gezeigt.

Aufgabe der vorliegenden Erfindung ist es somit, eine Rohrkupplung vorzugschlagen, bei welcher die oben genannten Nachteile vermieden werden. Insbesondere soll eine umfänglich möglichst gleichmässige Belastung der Rohre mit möglichst geringen Belastungen der Spannmechanismen und deren Angriffspunkte gewährleistet sein.

Die Aufgabe wird durch die Merkmale der unabhängigen Ansprüche 1, 6 und 13 gelöst. Vorteilhafte Weiterbildungen sind in den Figuren und in den abhängigen Patentansprüchen dargelegt.

Gemäss der Erfindung ist vorgesehen, dass die Breite beider einander überschneidenden Enden des Spanngurtes zusammen höchstens der Breite des Spanngurtes im Längsabschnitt zwischen diesen Enden entspricht. Der Begriff "Spanngurt" umfasst insbesondere Spannbänder bzw. alle zwischen ihren Enden im Wesentlichen flachen oder bandförmigen Spannelemente.

Damit ist neben dem Abführen der Spannkräfte in eine Richtung tangential zum Rohrquerschnitt und der über den gesamten Umfang ohne Unterbrechung gleichmässigen Belastung auf das Rohr die Anordnung des wie auch immer ausgeführten Spannmechanismus ganz nahe am äusseren Rohrumfang möglich. Verspannungen im Spannmechanismus, beispielsweise in einer Anordnung mit Bolzen an den Enden des Spanngurtes, die mittels einer oder mehrere Spannschrauben auseinandergedrückt werden können, werden damit ebenso vermieden wie Biegebelastungen der Spannschrauben selbst.

Vorzugsweise entspricht die Breite jedes der beiden Enden im wesentlichen der halben Breite des Spanngurtes. Die Enden selbst können vorteilhafterweise als geschlossene Schlaufen ausgebildet sein.

Die Herstellung der Schlaufen ist sehr einfach, wenn gemäss einer vorteilhaften Ausführungsform des Spanngurtes dieser über seine gesamte Länge durchgehend doppellagig ausgeführt ist. Dazu kann er vorzugsweise aus einem einstückigen, geschlossenen Band mit fix vorgegebener Länge bestehen.

Die oben genannte Aufgabe wird erfindungsgemäss auch durch eine Rohrkupplung der eingangs angegebenen Art gelöst, deren Spanngurt gemäss einem der obigen Merkmale ausgeführt ist. Jede Art von Spannmechanismus, vorzugsweise ein üblicher Spannmechanismus mit Bolzen an den Enden des Spanngurtes, deren Abstand über wenigstens eine im wesentlichen tangentiale Spannschraube veränderbar ist, kann damit in radialer Sicht besonders nahe am Rohrumfang angeordnet werden. Insbesondere kann gemäss einem weiteren vorteilhaften Merkmal der Erfindung die wenigstens eine Spannschraube durch jeweils einen Längsschlitz in den Enden des Spanngurtes hindurch geführt sein. Dadurch kann die Spannschraube tangential und besonders nahe dem Rohrumfang geführt werden, so dass selbst bei grossen Spannkräften nur eine minimale Biegebelastung und auch nur geringste Verspannungen in jeder Art von Spannmechanismus auftreten.

Eine vorteilhafte Ausführungsform der Erfindung mit einem Spannmechanismus unter Verwendung von zumindest einer Spannschraube ist zur Lösung der Aufgabe dadurch gekennzeichnet, dass jede Spannschraube mit ihrem Gewindeabschnitt in eine Gewindebohrung eines der Bolzen eingeschraubt und mit ihrem gewindeseitigen Ende im anderen Bolzen in einer Vertiefung, insbesondere einer Sackbohrung, aufgenommen ist, deren innerer Durchmesser wenigstens in Richtung der Achse des Bolzens nach aussen hin grösser wird. Dieses Merkmal gewährleistet die Reduktion von Spannungen im Spannschraubenverschluss und gestatten einen geometrischen Ausgleich bei Veränderung der Achsen der Bolzen an den Enden des Spanngurtes in der die Bolzen und die Spannschraube enthaltenden Ebene, wie sie beispielsweise bei der Verbindung von Rohren unterschiedlichen Durchmessers auftritt.

Um den geometrischen Ausgleich komplett zu ermöglichen und Verspannungen im Spannschraubenverschluss noch weiter zu verringern oder gänzlich zu vermeiden, weist die Vertiefung, insbesondere die Sackbohrung, in jeder radialen Richtung der Spannschraube einen grösseren Durchmesser als das gewindeseitige Ende der Spannschraube auf, und erweitert sich vorzugsweise nach aussen hin kegelförmig.

Bevorzugt ist dabei vorgesehen, dass die Spannschraube mit einem sphärisch gerundetes Schraubenende versehen ist.

Auch bei einer Variante der Rohrkupplung können die erfindungsgemässen Vorteile erzielt werden, bei welcher eine Brücke zur Überbrückung des Abstandes zwischen den Enden des Spanngurtes vorgesehen sind, welche Brücke mit einer Vertiefung für die Spannschraube versehen ist. Vorzugsweise ist diese Brücke mit einem der Enden des Spanngurtes verbunden. Durch dieses Merkmal kommt die Spannschraubenachse beim Verspannen der Rohrkupplung so nahe als möglich dem Scheitelpunkt des Rohres zu liegen, wobei als kleinster Abstand etwa der halbe Schaftaussendurchmesser der Spannschraube erreicht wird. Die Kraftvektoren der Spannkräfte des Spanngurtes kommen damit möglichst gut in Übereinstimmung mit der Verbindungslinie der Kraftvektoren der Spannkräfte, so dass Biegebelastungen der Spannschraube und Verspannungen in deren Verschlussteilen verringert oder gänzlich vermieden werden können.

Gemäss dem Stand der Technik sind Rohrkupplungen bekannt, deren wenigstens ein Dichtelement aus gummielastischen Werkstoff, innerhalb eines Gehäuses angeordnet ist. Gegebenenfalls können auch seitlich des Dichtelementes liegenden Lamellen und/oder wenigstens ein das wenigstens eine Dichtelement umfassendes Verankerungselement vorgesehen sein. Wie beispielsweise in der WO 2006/100628 A1 dazu geoffenbart ist, kann ein derartiges Verankerungselement aus einer Abfolge von in Umfangsrichtung aufeinanderfolgenden Elementen bestehen, die wiederum aus einem im Wesentlichen in Achsrichtung der Rohre verlaufenden ersten Schenkel und wenigstens einem zweiten, sich unter einem spitzen Winkel zum ersten Schenkel erstreckenden Schenkel aufweist.

Um auch hier die oben angeführten Vorteile des tangentialen Spannmechanismus mit möglichst nahe am Rohrumfang verlaufenden Spannkräften zu erzielen, ist in den Bereichen der Spannschrauben im Verankerungselement jeweils eine Vertiefung vorgesehen, und kommt jeweils ein Längsabschnitt jeder Spannschraube zumindest teilweise, vorzugsweise im wesentlichen bis zur Hälfte ihres Durchmessers, in jeweils einer Vertiefung zu liegen.

Eine bevorzugte Ausführungsform der Erfindung ist dadurch gekennzeichnet, dass die Vertiefung in wenigstens einem der ersten Schenkel des Verankerungselementes ausgearbeitet, vorzugsweise eingeprägt, ist.

Bevorzugt ist auch vorgesehen, dass in wenigstens einem Dichtelement eine der Vertiefung im ersten Schenkel des Verankerungselementes und/oder in der Brücke entsprechende Vertiefung ausgearbeitet ist, in deren Bereich jeweils eine der Spannschrauben verläuft.

Vorteilhafterweise können zumindest zwei Spannschrauben vorgesehen sein, vorzugsweise symmetrisch zur Längsmittelebene des Spanngurtes.

Eine über den gesamten Umfang des oder jedes Rohres effektiv gleiche und den Spanngurt auch über dessen gesamte Länge gleichmässig beanspruchende Krafteinwirkung kann durch eine weitere erfindungsgemässe Ausführungsform einer Rohrkupplung erzielt werden, bei der beide Bolzen über die Breite des Spanngurtes hinaus verlängert sind und an jeder Seite des Spanngurtes zumindest je eine Spannschraube in den verlängerten Enden der Bolzen vorgesehen ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer kompletten erfindungsgemässen Rohrkupplung in perspektivischer Darstellung ,
- Fig. 2: ist eine perspektivische Darstellung allein eines erfindungsgemässen Spanngurtes, jedoch in einer Stellung wie im Einsatz in einer Rohrkupplung,
- Fig. 3: zeigt einen Schnitt durch die Rohrkupplung der Fig. 1 senkrecht zur Spannschraube bei der Verbindung von zwei Rohren,
- Fig. 4: ist ein Schnitt durch die Rohrkupplung der Fig. 1 in der Ebene der Spannschraube,
- Fig. 5: ist ein Schnitt durch eine erfindungsgemässe Rohrkupplung entlang einer Spannschraube,
- Fig. 6: ist ein Längsschnitt durch den Verbindungsbereich zweier Rohre unterschiedlichen Durchmessers mit Darstellung des entsprechend verformten Gehäuses,
- Fig. 7: zeigt eine Variante mit einer Brücke zur Überbrückung des Abstandes zwischen den Enden des Spanngurtes, und
- Fig. 8: zeigt eine weitere Variante einer erfindungsgemässen Rohrkupplung, mit zwei seitlichen Spannschrauben.

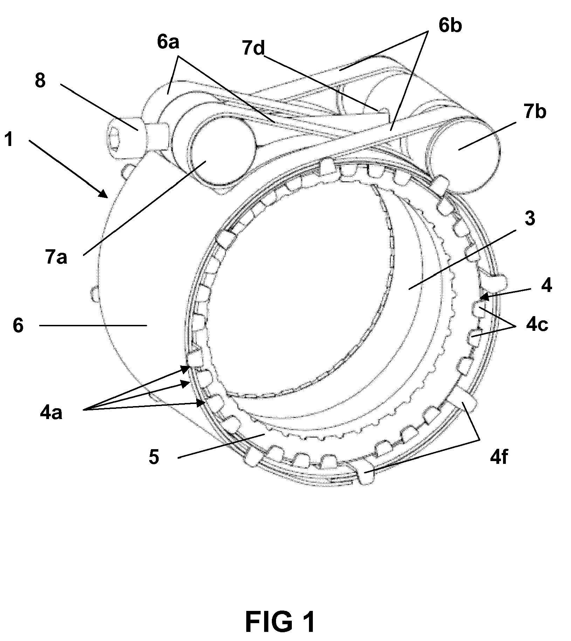

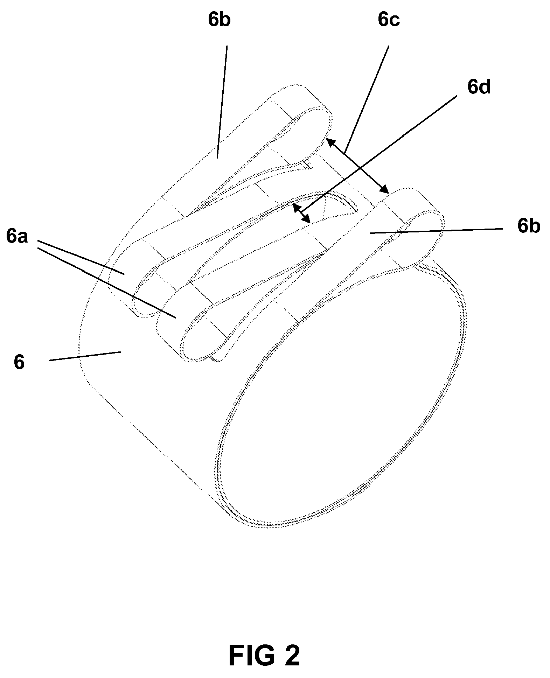

Fig. 1 zeigt eine Rohrkupplung 1 im Zustand, wie sie zur Verbindung von zwei Rohren 2 (siehe Fig. 2) aufgebaut und auf die Stossstelle zwischen den Enden der zwei Rohre 2 montiert ist. Wenigstens ein Dichtelement 3 aus gummielastischem Werkstoff ist als innerster Bauteil vorgesehen. Dieses oder jedes Dichtelement 3 wird bevorzugt von einem Verankerungselement 4 umfasst und gehalten, das aus vielen einzelnen und in Umfangsrichtung nebeneinanderliegenden Elementen 4a besteht und die Übertragung der infolge von Innendruck bzw. von aussen auf die Rohre 2 einwirkenden Kräfte übernimmt. Bevorzugt liegt an den Stirnseiten des oder jedes Dichtelementes 3 und innerhalb des stirnseitigen Endes des Verankerungselementes 4 zumindest eine Lamelle 5 an und verläuft um das jeweilige Rohr 2 herum, um ein Hinausdrücken des Dichtelementes 3 bei Kraftbeaufschlagung zu verhindern. Gegebenenfalls könnte auch noch ein Gehäuse das Verankerungselement 4 und die Lamellen 5 umgeben.

Wenigstens ein Spanngurt 6 liegt über im wesentlichen den gesamten Umfang an der Aussenseite des Verankerungselementes 4 an. Gegebenenfalls könnte der Spanngurt 6 auch unmittelbar auf der Dichtung 3 aufliegen oder an seiner Innenseite mit einer Dichtlage versehen sein. Die Enden 6a, 6b des Spanngurtes 6 sind mit in Achsrichtung der Rohrkupplung 1 und damit auch der zu verbindenden Rohre 2 ausgerichteten Bolzen 7a, 7b versehen, zwischen welchen Bolzen 7a, 7b zumindest eine Spannschraube 8 eingespannt ist. Zum Spannen des Spanngurtes 6 wird die Spannschraube 8 derart verdreht, dass eine die Bolzen 7a, 7b mit einer vom Bereich der Überschneidung der Enden 6a, 6b des Spanngurtes 6 weg weisende Kraft hervorgerufen wird. Damit werden die Bolzen 7a, 7b in vom Bereich der Überschneidung der Enden 6a, 6b des Spanngurtes 6 weg weisende, voneinander fernere Stellungen verschoben. Die Spannkräfte werden damit in eine Richtung tangential zum Rohrquerschnitt abgeführt und gleichzeitig wird über den im Wesentlichen komplett am Dichtelement 3 oder dem Verankerungselement 4 anliegenden Spanngurt 6 eine über dem gesamten Umfang ohne Unterbrechung gleichmässige Kraft und Belastung auf das Dichtelement 3, gegebenenfalls das Verankerungselement 4 und schliesslich auch das Rohr 2 hervorgerufen. Natürlich sind auch andere Spannmechanismen denkbar, die ohne oder mit anders angeordneten Spannschrauben 8 das Auslangen finden.

Um das Hindurchführen des Bolzens 7a am ersten, mittig aus dem Spanngurt 6 verlaufenden Ende 6a durch das gegenüberliegende Ende 6b des Spanngurtes 6 zu erleichtern, entspricht bevorzugt die Länge dieses Bolzens 7a der geringeren Breite des Endes 6a des Spanngurtes 6. Das Ende 6b verläuft von den Rändern des Spanngurtes 6 weg und umgreift das gegenüberliegenden Ende 6a des Spanngurtes 6, wobei die Länge des Bolzens 7b bevorzugt der gesamten Breite des Spanngurtes 6 entspricht.

In Fig. 2 ist der Spanngurt allein, jedoch in der Gebrauchsstellung wie in der Rohrkupplung der Fig. 1, dargestellt. Bevorzugt ist der Spanngurt 6 über seine gesamte Länge durchgehend doppellagig ausgeführt und besonders vorteilhaft sind seine Enden 6a, 6b als geschlossene Schlaufen ausgeführt, in welche die Bolzen 7a, 7b eingeschoben und bevorzugt darin fixiert sind. Besonders vorteilhaft und für die Übertragung grosser Kräfte geeignet ist eine Ausführungsform, bei welcher der Spanngurt 6 aus einem einstückigen, geschlossenen Band mit fix vorgegebener Länge besteht.

Wie in Fig. 1 und Fig. 2 klar zu erkennen ist, greifen die schlaufenförmigen Enden 6a, 6b des Spanngurtes 6 derart ineinander, dass eines der Enden - hier das Ende 6a - des Spanngurtes 6 durch zumindest einen in Umfangsrichtung verlaufenden Längsschlitz 6c des anderen Endes - hier des Endes 6b - geführt ist. Beide Enden 6a, 6b überschneiden einander, wobei vorzugsweise die Breite beider einander überschneidenden Enden 6a, 6b des Spanngurtes 6 zusammen im wesentlichen der Breite des Spanngurtes 6 in seinem Längsabschnitt - der dem Rohrumfang folgt - zwischen den Enden 6a, 6b entspricht. Bevorzugt bildet jedes der Enden 6a, 6b im wesentlichen die halbe Breite des Spanngurtes 6 im Überschneidungsbereiches.

Wie aus Fig. 2 besonders gut hervorgeht, ist auch in jenem Ende 6a des Spanngurtes 6, das durch den Längsschlitz 6c im anderen Ende 6b hindurchgeführt ist, ein weiterer, sich in Umfangsrichtung des Spanngurtes 6 erstreckender Längsschlitz 6d vorgesehen. Dadurch ist es möglich, die Spannschraube 8 im Bereich des Längsschlitzes 6d zu führen und so nahe als möglich tangential an die Rohraussenseite anzunähern, da sich zwischen Spannschraube 8 und Rohr 2 lediglich das Dichtelement 3, allenfalls das Verankerungselement 4 und/oder ein Gehäuse, nicht aber Material des Spanngurtes 6 befindet. Damit fehlt an den Enden 6a, 6b gegenüber der übrigen Breite des Spanngurtes 6 lediglich die Breite des Durchmessers der oder jeder zwischen den Bolzen 7a, 7b verlaufenden Spannschraube 8.

Die in Fig. 1 in der Längsmitte der Bolzen 7a, 7b ansetzende Spannschraube 8 ist mit ihrem Gewindeabschnitt 8a in die Gewindebohrung eines der Bolzen 7a eingeschraubt. Das gewindeseitige Ende 8b der Spannschraube 8 ist mit dem anderen Bolzen 7b verbunden, z.B. in einer Vertiefung dieses Bolzens 7b, insbesondere einer Sackbohrung 7d, aufgenommen. Zum Spannen des Spanngurtes 6 wird die Spannschraube 8 derart verdreht, dass eine die Bolzen 7a, 7b mit einer vom Bereich der Überschneidung der Enden 6a, 6b des Spanngurtes 6 weg weisende Kraft hervorgerufen wird. Damit werden die Bolzen 7a, 7b in vom Bereich der Überschneidung der Enden 6a, 6b des Spanngurtes 6 weg weisende, voneinander fernere Stellungen verschoben. Die Spannkräfte werden damit in eine Richtung tangential zum Rohrquerschnitt abgeführt und gleichzeitig wird über den im Wesentlichen komplett am Gehäuse 4 anliegenden Spanngurt 6 eine über dem gesamten Umfang ohne Unterbrechung gleichmässige Kraft und Belastung auf das Gehäuse 4, das Dichtelement 3 und schliesslich auch das Rohr 2 hervorgerufen. Die oder jede Spannschraube 8 ist im Wesentlichen tangential zur Rohrkupplung 1 und den zu verbindenden Rohren 2 orientiert.

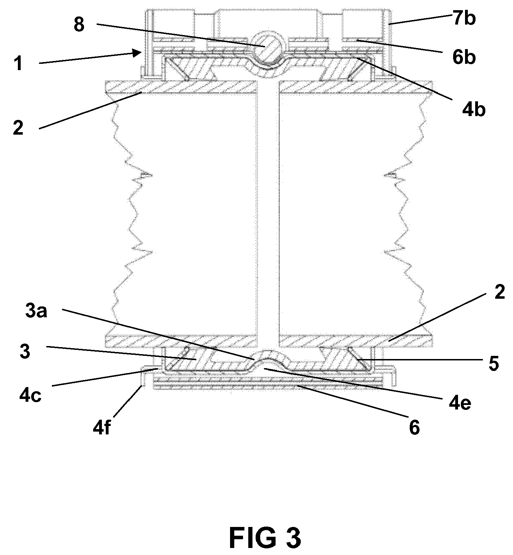

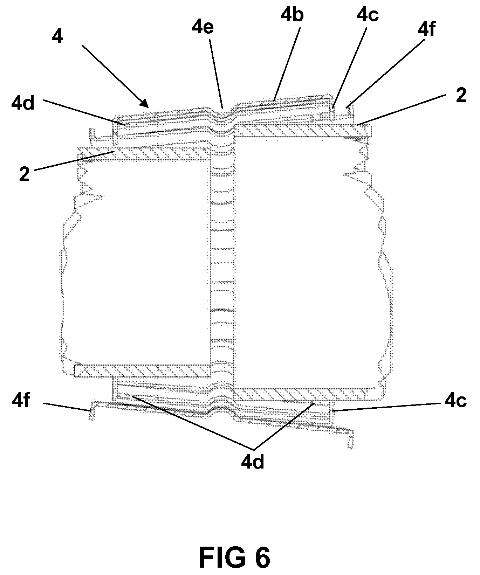

In der Schnittansicht der Fig. 3 ist zu erkennen, dass die Elemente 4a des Verankerungselementes 4 aus jeweils einem im wesentlichen in Achsrichtung der Rohre 2 verlaufenden ersten Schenkel 4b und wenigstens einem zweiten, sich unter einem spitzen Winkel zum ersten Schenkel 4b erstreckenden Schenkel 4c aufgebaut sind. Der Abstand zwischen den Elementen 4a ist durch wenigstens einen elastisch oder auch plastisch verformbaren Steg 4d (siehe dazu Fig. 6) überbrückt, der zwischen den ersten Schenkeln 4b verläuft. Die Stege 4d können abwechselnd vor und hinter der Längsmitte der ersten Schenkel 4b angeordnet sein. Um die Lage der Spannschraube 8 möglichst nahe dem Scheitelpunkt der Rohre 2 zur Verminderung der Biegebelastung der Spannschraube 8 zu ermöglichen, ist bevorzugt im ersten Schenkel 4b eine Vertiefung 4e ausgearbeitet, was vorzugsweise durch Prägung erfolgen kann. Auch im Dichtelement 3 ist bevorzugt zur Aufnahme der Vertiefung 4e des Verankerungselementes 4 eine Vertiefung 3a vorgesehen. Der mittlere Längsabschnitt der Spannschraube 8 kommt zumindest teilweise, vorzugsweise im wesentlichen bis zur Hälfte ihres Durchmessers, in dieser Vertiefung 4e des Verankerungselementes 4 zu liegen.

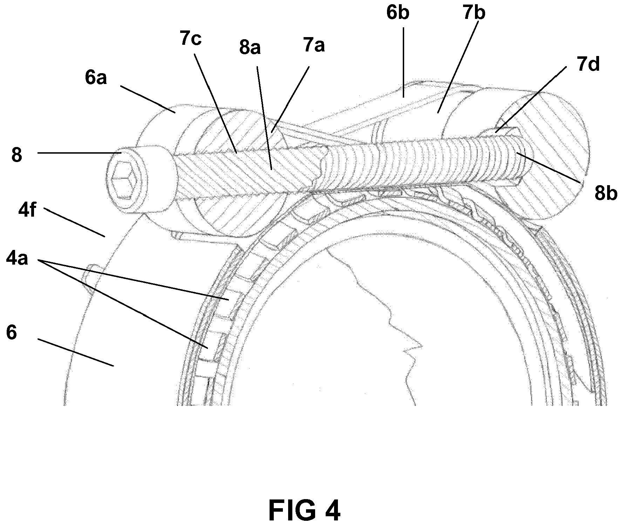

In Fig. 4 ist in vergrösserter Ansicht die Lagerung der Spannschraube 8 in den Bolzen 7a, 7b dargestellt. Die Spannschraube 8 ist mit ihrem Gewindeabschnitt 8a in einen Bolzen 7a eingeschraubt und übt durch Anliegen ihres gewindeseitigen Endes 8b am Bolzen 7b eine Kraft aus, die die beiden Bolzen 7a, 7b voneinander weg beaufschlagt. Dazu ist das gewindeseitige Ende 8b in einer Sackbohrung 7c im Bolzen 7b aufgenommen, welche Sackbohrung 7c bevorzugt wenigstens in Richtung der Achse des Bolzens 7b einen grösseren Durchmesser aufweist als das gewindeseitige Ende 8b der Spannschraube 8. Für einen in alle Richtungen wirkende Reduktion von Spannungen im Spannschraubenverschluss und einen allseitigen geometrischen Ausgleich bei Veränderung der Achsen der Bolzen 7a, 7b zueinander weist die Sackbohrung 7c vorzugsweise über den kompletten Umfang der Spannschraube 8 einen grösseren Durchmesser als das gewindeseitige Ende 8b der Spannschraube 8 auf. Damit sind Abweichungen der Achsen der Bolzen 7a, 7b von der parallelen Lage - wie bei Rohren 2 gleichen Durchmessers - ohne Verspannungen oder Biegebelastungen der Spannschraube 8 in jeder Richtung möglich, wie dies beispielsweise bei der Verbindung von Rohren 2 unterschiedlichen Durchmessers auftritt (wie beispielsweise in Fig. 6). Bevorzugt ist das gewindeseitige Ende 8b der Spannschraube 8 mit einem sphärisch gerundeten Schraubenende versehen.

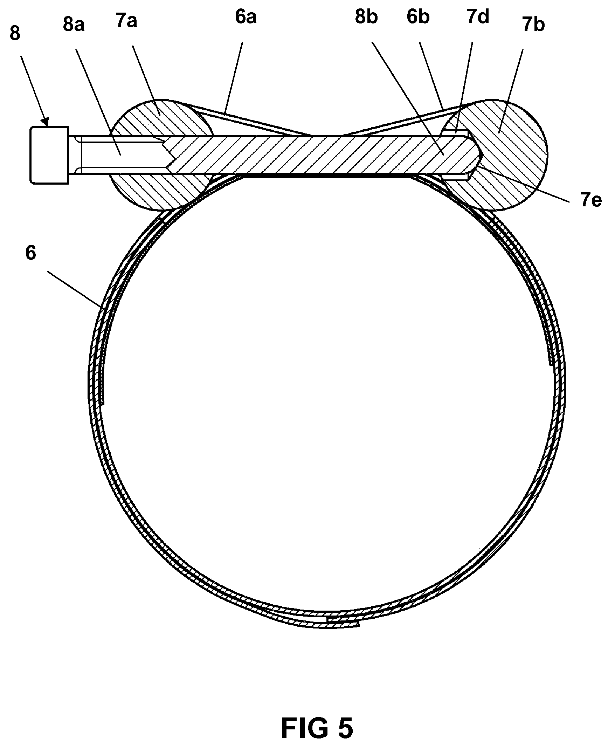

Aus der Schnitt-Darstellung der Fig. 5 geht eine weitere vorteilhafte Ausführungsform des Spannmechanismus hervor. Dabei ist die Sackbohrung 7c im Bolzen 7b mit einem sich nach aussen hin kegelförmig erweiternden Abschnitt 7e, vorzugsweise dem Boden der Sackbohrung 7c, versehen.

In Fig. 6 ist die Situation für den Fall der Verbindung von Rohren 2 mit unterschiedlichem Durchmesser dargestellt, wobei allerdings nur die Rohre 2 und das Verankerungselement 4 gezeigt sind. In der kompletten Rohrkupplung liegt dann noch über dem Verankerungselement 4 der Spanngurt 6 und gegebenenfalls zwischen diesem Spanngurt 6 und dem Verankerungselement 4 noch ein Gehäuse. Deutlich zu erkennen ist allerdings die bevorzugte Ausführung des Verankerungselementes 4 in einer Weise, dass ein dritter Schenkel 4f einiger Elemente 4a des Verankerungselementes 4 von der Rohrachse weg ausgerichtet ist. Durch diese Ausführung ist der - nicht dargestellte - aufliegende Spanngurt 6 auch bei der deutlich zu erkennenden konischen Verformung des Verankerungselementes 4 ohne Einsatz weiterer fixierender oder haltender Bauteile gegenüber Abgleiten allein durch die nach aussen orientierten dritten Schenkel 4f vom Verankerungselement 4 gesichert.

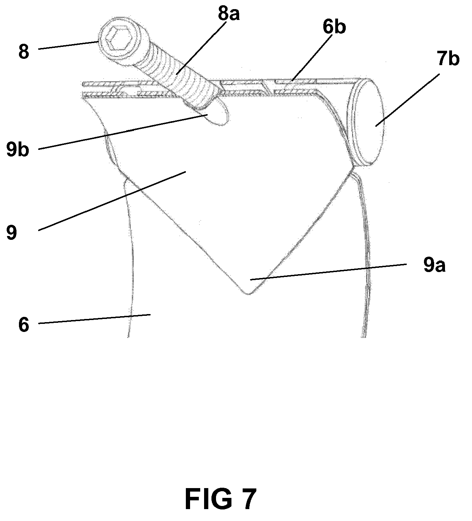

In Fig. 7 ist noch eine Ausführungsform der Rohrkupplung 1 dargestellt, bei der eine Brücke 9 vorgesehen ist, die den Abstand überbrückt, der zwischen vom Verankerungselement 4 abgehobenen Enden 6a des Spanngurtes 6 vorgesehen ist, um auch in diesem, mit dem erfindungsgemässen Spanngurt 6 sehr schmalen Bereich einen radial nach innen wirkenden Druck zu bewirken. Die Enden 9a der Brücke sind bevorzugt pfeilförmig geschnitten, um ein Verkeilen zwischen den Elementen 4a des Verankerungselementes 4 beim Darübergleiten während des Spannens des Spanngurtes 6 zu verhindern. Auch in der Brücke 9 ist vorteilhafterweise eine Vertiefung 9b ausgearbeitet, damit der Gewindeabschnitt 8a der Spannschraube 8 darin aufgenommen und die Spannschraube 8 somit möglichst nahe dem Scheitelpunkt der zu verbindenden Rohre 2 angeordnet werden kann.

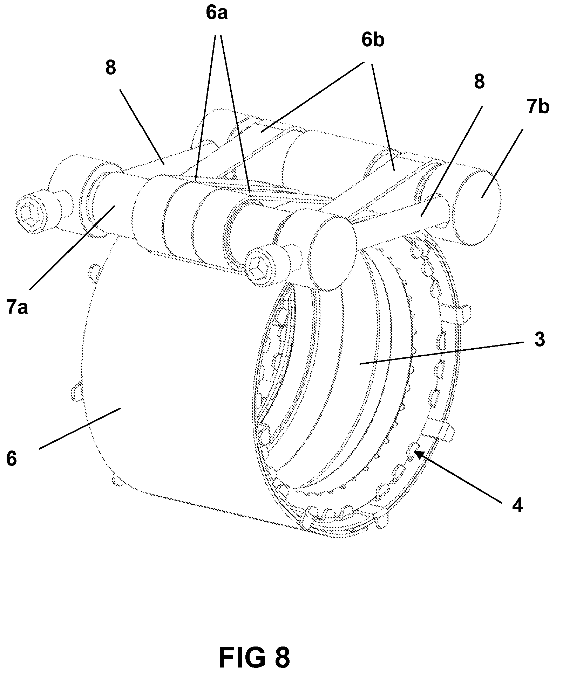

Anstelle einer mittigen Spannschraube 8 kann auch - wie in Fig. 8 dargestellt - je eine Spannschraube an jedem Ende der Bolzen 7a, 7b vorgesehen sein, wobei auch weitere Spannschrauben 8 entlang der Bolzen 7a, 7b angeordnet sein könnten. Vorteilhafterweise sind dazu beide Bolzen 7a, 7b über die Breite des Spanngurtes 6 hinaus verlängert, so dass die Spannschrauben 8 ausserhalb der Breite des Spanngurtes 6 zu liegen kommen. Die Bolzen 7a, 7b können dazu gegebenenfalls mehrteilig oder auch teleskopartig verlängerbar ausgeführt sein, um sie erst nach dem Überkreuzen der Enden 6a, 6b des Spanngurtes 6 auf die eigentlich gewünschte Länge zu bringen.

### Bezugszeichenliste

- 1: Rohrkupplung
- 2: Rohr
- 3: Dichtelement
- 3a: Dichtelement-Vertiefung
- 4: Verankerungselement
- 4a: Element des Verankerungselementes
- 4b: erster Schenkel
- 4c: zweiter Schenkel
- 4d: Steg
- 4e: Gehäuse-Vertiefung
- 4f: dritter Schenkel nach aussen
- 5: Lamelle
- 6: Spanngurt
- 6a, 6b: Spanngurtenden
- 6c: Längsschlitz im ersten Spanngurtende
- 6d: Längsschlitz im zweiten Spanngurtende
- 7a, 7b: Bolzen
- 7c: Gewindebohrung
- 7d: Sackbohrung
- 7e: Kegelförmiger Boden der Sackbohrung
- 8: Spannschraube
- 8a: Gewindeabschnitt
- 8b: gewindeseitiges Ende
- 9: Brücke
- 9a: Brückenende
- 9b: Brücken-Vertiefung

## Patentansprüche

1. Spanngurt (6) für eine Rohrkupplung (1) zum kraftschlüssigen Verbinden von Rohren, insbesondere von glattendigen Rohren (2), durch Umfassen zumindest eines der Rohre (2), insbesondere dessen Rohrende, in Umfangsrichtung, wobei die Enden (6a, 6b) des Spanngurtes (6) mit im wesentlichen in Achsrichtung der Rohre (2) angeordneten Bolzen (7a, 7b) verbindbar sind und einander in Umfangsrichtung der Rohre (2) gesehen überschneiden, wobei eines der Enden (6a) des Spanngurtes (6) durch zumindest einen in Umfangsrichtung verlaufenden Längsschlitz (6c) des anderen Endes (6b) geführt ist, und wobei zum Spannen des Spanngurtes (6) der Abstand der Enden (6a, 6b) derart veränderbar ist, dass sich die Enden (6a, 6b) vom Bereich ihrer Überschneidung weg verschieben, wobei auch in jenem Ende (6a) des Spanngurtes (6), welches durch den Längsschlitz (6c) des anderen Endes (6b) geführt ist, zumindest ein sich in Längsrichtung des Spanngurtes (6) erstreckender Längsschlitz (6d) vorgesehen ist, **dadurch gekennzeichnet, dass** die Breite beider einander überschneidenden Enden (6a, 6b) des Spanngurtes (6) zusammen höchstens der Breite des Spanngurtes (6) im Längsabschnitt zwischen diesen Enden (6a, 6b) entspricht.

2. Spanngurt nach Anspruch 1, **dadurch gekennzeichnet, dass** die Breite jedes der beiden Enden (6a, 6b) im wesentlichen der halben Breite des Spanngurtes (6) entspricht.

3. Spanngurt nach zumindest einem der Ansprüche 1 oder 2, **dadurch gekennzeichnet, dass** die Enden (6a, 6b) des Spanngurtes (6) als geschlossene Schlaufen ausgebildet sind.

4. Spanngurt nach zumindest einem der Ansprüche 1 bis 3, **dadurch gekennzeichnet, dass** der Spanngurt (6) über seine gesamte Länge durchgehend doppellagig ausgeführt ist.

5. Spanngurt nach zumindest einem der Ansprüche 1 bis 3, **dadurch gekennzeichnet, dass** der Spanngurt (6) aus einem einstückigen, geschlossenen Band mit fix vorgegebener Länge besteht.

6. Rohrkupplung (1) zum kraftschlüssigen Verbinden von Rohren, insbesondere von glattendigen Rohren (2), mit wenigstens einem Dichtelement (3) und wenigstens einem zumindest eines der Rohre (2), insbesondere dessen Rohrende, in Umfangsrichtung umfassenden Spanngurt (6), wobei der Abstand von dessen Enden (6a, 6b) mit einem Spannmechanismus veränderbar ist, welcher Spannmechanismus im wesentlichen in Achsrichtung der Rohre (2) angeordnete Bolzen (7a, 7b) umfasst, deren Abstand zum Spannen des Spanngurtes (6) über wenigstens eine im wesentlichen tangentiale Spannschraube (8) derart veränderbar ist, dass die beiden Bolzen (7a, 7b) und damit die Enden (6a, 6b) des Spanngurtes (6) vom Bereich ihrer Überschneidung weg verschiebbar sind, **dadurch gekennzeichnet, dass** der wenigstens eine Spanngurt (6) nach zumindest einem der Ansprüche 1 bis 5 ausgeführt ist.

7. Rohrkupplung nach Anspruch 6, **dadurch gekennzeichnet, dass** die wenigstens eine Spannschraube (8) durch jeweils einen der Längsschlitze (6c, 6d) in den Enden (6a, 6b) des Spanngurtes (6) hindurch geführt ist.

8. Rohrkupplung nach Anspruch 6 oder 7, **dadurch gekennzeichnet, dass** jede Spannschraube (8) mit ihrem Gewindeabschnitt (8a) in eine Gewindebohrung (7c) eines der Bolzen (7a) eingeschraubt und mit ihrem gewindeseitigen Ende (8b) im anderen Bolzen (7b) in einer Vertiefung, insbesondere einer Sackbohrung (7d), aufgenommen ist, deren innerer Durchmesser wenigstens in Richtung der Achse des Bolzens (7b) nach aussen hin grösser wird.

9. Rohrkupplung nach Anspruch 8, **dadurch gekennzeichnet, dass** die Vertiefung, insbesondere die Sackbohrung (7d), in jeder radialen Richtung der Spannschraube (8) einen grösseren Durchmesser als das gewindeseitige Ende (8b) der Spannschraube (8) aufweist, und sich vorzugsweise nach aussen hin kegelförmig erweitert.

10. Rohrkupplung nach zumindest einem der Ansprüche 6 bis 9, **dadurch gekennzeichnet, dass** die Spannschraube (8) mit einem sphärisch gerundeten Schraubenende (8b) versehen ist.

11. Rohrkupplung nach zumindest einem der Ansprüche 6 bis 10, **dadurch gekennzeichnet, dass** eine Brücke (9) zur Überbrückung des Abstandes zwischen den Enden (6a, 6b) des Spanngurtes (6) vorgesehen ist, welche Brücke (9) mit jeweils einer Vertiefung (9b) für jede Spannschraube (8) versehen ist.

12. Rohrkupplung nach Anspruch 11, **dadurch gekennzeichnet, dass** die Brücke (9) mit einem der Enden (6a, 6b) des Spanngurtes (6) verbunden ist.

13. Rohrkupplung (1) nach zumindest einem der Ansprüche 6 bis 12, mit wenigstens einem Dichtelement (3) aus gummielastischen Werkstoff, gegebenenfalls noch mit einem Gehäuse, seitlich des Dichtelementes (3) liegenden Lamellen und wenigstens einem das wenigstens eine Dichtelement (3) umfassenden Verankerungselement (4) aus einer Abfolge von in Umfangsrichtung aufeinanderfolgenden Elementen (4a), die wiederum aus einem im Wesentlichen in Achsrichtung der Rohre (2) verlaufenden ersten Schenkel (4b) und wenigstens einem zweiten, sich unter einem spitzen Winkel zum ersten Schenkel (4b) erstreckenden Schenkel (4c) aufweist, wobei bevorzugt der Abstand zwischen den Elementen (4a) durch wenigstens einen im wesentlichen tangential zu den Rohren verlaufenden, elastisch oder plastisch verformbaren Steg (4d) überbrückt ist, und wobei allenfalls mindestens einige Elemente (4a) des Verankerungselementes (4) mit dritten Schenkeln (4f) versehen sind, welche von der Rohrachse weg, nach aussen ausgerichtet sind, **dadurch gekennzeichnet, dass** in den Bereichen der Spannschrauben (8) im Verankerungselement (4) jeweils eine Vertiefung (4e) vorgesehen ist, und jeweils ein Längsabschnitt jeder Spannschraube (8) zumindest teilweise, vorzugsweise im wesentlichen bis zur Hälfte ihres Durchmessers, in jeweils einer Vertiefung (4e) zu liegen kommt.

14. Rohrkupplung nach Anspruch 13, **dadurch gekennzeichnet, dass** die Vertiefung (4e) in wenigstens einem der ersten Schenkel (4b) des Verankerungselementes (4) ausgearbeitet, vorzugsweise eingeprägt, ist.

15. Rohrkupplung nach zumindest einem der Ansprüche 13 oder 14, **dadurch gekennzeichnet, dass** in wenigstens einem Dichtelement (3) eine der Vertiefung (4e und/oder 9b) im ersten Schenkel (4b) des Verankerungselementes (4) und/oder in der Brücke (9) entsprechende Vertiefung (3a) ausgearbeitet ist, in deren Bereich jeweils eine der Spannschrauben (8) verläuft.

16. Rohrkupplung nach zumindest einem der Ansprüche 6 bis 15, **dadurch gekennzeichnet, dass** zumindest zwei Spannschrauben (8) vorgesehen sind, vorzugsweise symmetrisch zur Längsmittelebene des Spanngurtes (6).

17. Rohrkupplung nach Anspruch 16, **dadurch gekennzeichnet, dass** beide Bolzen (7a, 7b) über die Breite des Spanngurtes (6) hinaus verlängert sind und an jeder Seite des Spanngurtes (6) zumindest je eine Spannschraube (8) in den verlängerten Enden der Bolzen (7a, 7b) vorgesehen ist.

## Claims

1. A clamping belt (6) for a pipe coupling (1) for the friction-locked connection of pipes, in particular smooth-end pipes (2), by engaging around at least one of the pipes (2), in particular its pipe end, in the circumferential direction, wherein the ends (6a, 6b) of the clamping belt (6) can be connected with bolts (7a, 7b) disposed essentially in the axial direction of the pipes (2) and overlap one another, as viewed in the circumferential direction of the pipes (2), wherein one of the ends (6a) of the clamping belt (6) is guided through at least one longitudinal slot (6c) of the other end (6b), said longitudinal slot running in the circumferential direction, and wherein, for the purpose of tightening the clamping belt (6), the distance between the ends (6a, 6b) is variable, such that the ends (6a, 6b) are displaced away from the region of their overlap, wherein at least one longitudinal slot (6d) extending in the longitudinal direction of the clamping belt (6) is also provided in the end (6a) of the clamping belt (6) which is guided through the longitudinal slot (6c) of the other end (6b), **characterised in that** the width of the two mutually overlapping ends (6a, 6b) of the clamping belt (6) together corresponds at most to the width of the clamping belt (6) in the longitudinal section between these ends (6a, 6b).

2. The clamping belt according to claim 1, **characterised in that** the width of each of the two ends (6a, 6b) essentially corresponds to half the width of the clamping belt (6).

3. The clamping belt according to at least one of claims 1 or 2, **characterised in that** the ends (6a, 6b) of the clamping belt (6) are constituted as closed loops.

4. The clamping belt according to at least one of claims 1 to 3, **characterised in that** the clamping belt (6) is constituted double-ply contiguously over its entire length.

5. The clamping belt according to at least one of claims 1 to 3, **characterised in that** the clamping belt (6) comprises a one-piece, closed band with a fixed predefined length.

6. A pipe coupling (1) for the friction-locked connection of pipes, in particular smooth-end pipes (2), with at least one sealing element (3) and at least one clamping belt (6) engaging around at least one of the pipes (2), in particular its pipe end, in the circumferential direction, wherein the spacing of the ends (6a, 6b) of said clamping belt can be varied with a tightening mechanism, which tightening mechanism comprises bolts (7a, 7b) disposed essentially in the axial direction of the pipes (2), the spacing between which bolts can be varied for the tightening of the clamping belt (6) by means of at least one essentially tangential tightening screw (8), in such a way that the two bolts (7a, 7b) and therefore the ends (6a, 6b) of the clamping belt (6) can be displaced away from the region of their overlap, **characterised in that** the at least one clamping belt (6) is constituted according to at least one of claims 1 to 5.

7. The pipe coupling according to claim 6, **characterised in that** the at least one tightening screw (8) is guided in each case through one of longitudinal slots (6c, 6d) in the ends (6a, 6b) of the clamping belt (6).

8. The pipe coupling according to claim 6 or 7, **characterised in that** each tightening screw (8) is screwed with its threaded portion (8a) into a threaded hole (7c) of one of the bolts (7a) and is received with its threaded-side end (8b) in the other bolt (7b) in a recess, in particular a blind hole (7d), the inner diameter whereof becomes greater outwards at least in the direction of the axis of the bolt (7b).

9. The pipe coupling according to claim 8, **characterised in that** the recess, in particular the blind hole (7d), has, in every radial direction of the tightening screw (8), a greater diameter than the threaded-side end (8b) of the tightening screw (8), and preferably widens outwards in the shape of a cone.

10. The pipe coupling according to at least one of claims 6 to 9, **characterised in that** the tightening screw (8) is provided with a spherically rounded screw end (8b).

11. The pipe coupling according to at least one of claims 6 to 10, **characterised in that** a bridge (9) for bridging the spacing between the ends (6a, 6b) of the clamping belt (6) is provided, which bridge (9) is provided in each case with a recess (9b) for each tightening screw (8).

12. The pipe coupling according to claim 11, **characterised in that** the bridge (9) is connected to one of the ends (6a, 6b) of the clamping belt (6).

13. The pipe coupling (1) according to at least one of claims 6 to 12, with at least one sealing element (3) made out of rubber-elastic material, optionally also with a housing, discs lying at the side of the sealing element (3) and at least one anchoring element (4) engaging around the at least one sealing element (3) and comprising a sequence of elements (4a) following one another in the circumferential direction, which in turn comprise a first leg (4b) running essentially in the axial direction of the pipes (2) and at least a second leg (4c) extending at an acute angle to the first leg (4b), wherein the spacing between the elements (4a) is preferably bridged by at least one elastically or plastically deformable web (4d) running essentially tangential to the pipes, and wherein at all events at least some elements (4a) of the anchoring element (4) are provided with third legs (4f), which are directed outwards away from the pipe axis, **characterised in that** a recess (4e) is provided in the anchoring element (4) in each case in the regions of the tightening screws (8) and a longitudinal section of each tightening screw (8) in each case comes to lie at least partially, preferably essentially up to half its diameter, in a recess (4e).

14. The pipe coupling according to claim 13, **characterised in that** the recess (4e) is fashioned out, preferably impressed, in at least one of the first legs (4b) of the anchoring element (4).

15. The pipe coupling according to at least one of claims 13 or 14, **characterised in that**, in at least one sealing element (3), one of the recesses (4e and/or 9b) is fashioned out in the first leg (4b) of the anchoring element (4) and/or, in the bridge (9), a corresponding recess (3a) is fashioned out, in the region whereof one of the tightening screws (8) runs in each case.

16. The pipe coupling according to at least one of claims 6 to 15, **characterised in that** at least two tightening screws (8) are provided, preferably symmetrical with the longitudinal central plane of the clamping belt (6).

17. The pipe coupling according to claim 16, **characterised in that** the two bolts (7a, 7b) are elongated beyond the width of the clamping belt (6) and, at each side of the clamping belt (6), at least one tightening screw (8) is provided in each case in the elongated ends of the bolts (7a, 7b).

## Revendications

1. Sangle (6) pour un couplage tubulaire (1) destiné à la liaison par adhérence de force de tubes, en particulier de tubes à bouts lisses (2), en entourant au moins un des tubes (2), en particulier son extrémité de tube, dans le sens périphérique, sachant que les extrémités (6a, 6b) de la sangle (6) peuvent être reliées à des chevilles (7a, 7b) disposées essentiellement dans la direction axiale des tubes (2) et se recoupent l'une et l'autre vu dans le sens périphérique des tubes (2), sachant qu'une des extrémités (6a) de la sangle (6) est dirigée par au moins une fente longitudinale (6c) périphérique de l'autre extrémité (6b), et sachant que pour tendre la sangle (6), l'écart des extrémités (6a, 6b) est ainsi modifiable que les extrémités (6a, 6b) s'éloignent de l'endroit où elles se recouvrent, sachant que dans l'extrémité (6a) de la sangle (6) qui est dirigée par la fente longitudinale (6c) de l'autre extrémité (6b), au moins une fente longitudinale (6d) s'étendant dans le sens longitudinal de la sangle (6) est prévue, **caractérisée en ce que** la largeur conjointe des deux extrémités (6a, 6b) de la sangle (6) se recoupant l'une et l'autre correspond au plus à la largeur de la sangle (6) dans le segment longitudinal entre ces extrémités (6a, 6b).

2. Sangle selon la revendication 1, **caractérisée en ce que** la largeur de chacune des deux extrémités (6a, 6b) correspond essentiellement à la demi-largeur de la sangle (5).

3. Sangle selon la revendication 1 ou 2, **caractérisée en ce que** les extrémités (6a, 6b) de la sangle (6) sont conçues en tant que boucles fermées.

4. Sangle selon au moins l'une des revendications 1 à 3, **caractérisée en ce que** la sangle (6) est conçue en double couche continue sur toute sa longueur.

5. Sangle selon au moins l'une des revendications 1 à 3, **caractérisée en ce que** la sangle (6) est composée d'une bande fermée d'un seul tenant avec une longueur fixe prédéfinie.

6. Couplage tubulaire (1) destiné à la liaison par adhérence de force de tubes, en particulier de tubes à bouts lisses (2), comprenant au moins un élément étanche (3) et au moins une sangle (6) entourant au moins un des tubes (2), en particulier son extrémité de tube, dans le sens périphérique, sachant que l'écart de ses extrémités (6a, 6b) peut être modifié avec un mécanisme de tension, lequel mécanisme de tension comprend essentiellement des chevilles (7a, 7b) disposées dans le sens axial des tubes (2), dont l'écart pour tendre la sangle (6) est ainsi modifiable par au moins une vis de serrage (8) essentiellement tangentielle, que les deux chevilles (7a, 7b) et donc les extrémités (6a, 6b) de la sangle (6), peuvent s'éloigner de l'endroit où elles se recouvrent, **caractérisé en ce que** l'au moins une sangle (6) est conçue selon au moins l'une des revendications 1 à 5.

7. Couplage tubulaire selon la revendication 6, **caractérisé en ce que** l'au moins une vis de serrage (8) est dirigée dans les extrémités (6a, 6b) de la sangle (6) au travers respectivement d'une des fentes longitudinales (6c, 6d).

8. Couplage tubulaire selon la revendication 6 ou 7, **caractérisé en ce que** chaque vis de serrage (8) est vissée dans un alésage fileté (7c) d'une des chevilles (7a) par son segment fileté (8a), et est reçue dans un creux, en particulier dans un trou borgne (7d) dans l'autre cheville (7b) par son extrémité côté filet (8b), dont le diamètre intérieur est plus grand vers l'extérieur, en particulier en direction de l'axe de la cheville (7b).

9. Couplage tubulaire selon la revendication 8, **caractérisé en ce que** le creux, en particulier le trou borgne (7d), présente dans chaque direction radiale de la vis de serrage (8), un diamètre plus grand que l'extrémité côté filet (8b) de la vis de serrage (8) et s'élargit de façon conique vers l'extérieur de préférence.

10. Couplage tubulaire selon au moins l'une des revendications 6 à 9, **caractérisé en ce que** la vis de serrage (8) est dotée d'une extrémité de vis (8b) sphérique arrondie.

11. Couplage tubulaire selon au moins l'une des revendications 6 à 10, **caractérisé en ce qu'**un pont (9) pour combler l'écart entre les extrémités (6a, 6b) de la sangle (6) est prévu, lequel pont (9) est doté d'un creux (9b) respectif pour chaque vis de serrage (8).

12. Couplage tubulaire selon la revendication 11, **caractérisé en ce que** le pont (9) est relié à une des extrémités (6a, 6b) de la sangle (6).

13. Couplage tubulaire (1) selon au moins l'une des revendications 6 à 12, comprenant au moins un élément étanche (3) en matériau caoutchouc élastique, le cas échéant également avec un logement, des lamelles situées sur les côtés de l'élément étanche (3) et au moins un élément d'ancrage (4) entourant l'élément étanche (3) d'une série d'éléments (4a) l'un à la suite de l'autre dans le sens périphérique, qui présente à son tour une première branche (4b) passant essentiellement dans la direction axiale des tubes (2) et au moins une deuxième branche (4c) s'étendant en angle aigu par rapport à la première branche (4b), sachant que de préférence, l'écart entre les éléments (4a) est comblé par au moins une tige (4d) élastiquement ou plastiquement déformable, essentiellement tangentielle aux tubes, et sachant que tout au plus, au moins quelques éléments (4a) de l'élément d'ancrage (4) sont dotés de troisièmes branches (4f) qui sont dirigées éloignées de l'axe des tubes, vers l'extérieur, **caractérisé en ce que** dans les zones de la vis de serrage (8) dans l'élément d'ancrage (4), un creux (4e) respectif est prévu et respectivement, un segment longitudinal de chaque vis de serrage (8) vient se poser, au moins partiellement, de préférence essentiellement jusqu'à la moitié de son diamètre, dans chacun des creux (4e).

14. Couplage tubulaire selon la revendication 13, **caractérisé en ce que** le creux (4e) est usiné, de préférence gravé, dans au moins une des premières branches (4b) de l'élément d'ancrage (4).

15. Couplage tubulaire selon au moins l'une des revendications 13 ou 14, **caractérisé en ce que** dans au moins un élément étanche (3), un des creux (4e et/ou 9b) dans la première branche (4b) de l'élément d'ancrage (4) et/ou un creux (3a) correspondant est usiné dans le pont (9), au niveau duquel une vis de serrage (8) respective passe.

16. Couplage tubulaire selon au moins l'une des revendications 6 à 15, **caractérisé en ce qu'**au moins deux vis de serrage (8) sont prévues, de préférence symétriquement au plan médian longitudinal de la sangle (6).

17. Couplage tubulaire selon la revendication 16, **caractérisé en ce que** les deux chevilles (7a, 7b) sont prolongées au-delà de la largeur de la sangle (6), et sur chaque côté de la sangle (6), il est prévu au moins une vis de serrage (8) dans les extrémités prolongées des chevilles (7a, 7b).
